# EUROPÄISCHE PATENTSCHRIFT

(11) **EP 3 774 491 B1**
(45) Veröffentlichungstag und Bekanntmachung des Hinweises auf die Patenterteilung: **24.04.2024**
(21) Anmeldenummer: 19749272.1
(22) Anmeldetag: 24.07.2019
(51) Int. Cl.: B62B 3/16, B62B 5/06, B60B 33/00

(54) **WARENKORB**
SHOPPING BASKET
PANIER D'ACHAT

(30) Priorität: 02.05.2019 DE 102019111346
(43) Veröffentlichungstag der Anmeldung: 17.02.2021
(73) Patentinhaber: Wanzl GmbH & Co. KGaA, 89340 Leipheim (DE)
(72) Erfinder: GASCHE, Thomas, 89340 Leipheim (DE); STÖCKLE, Dieter, 89361 Landensberg (DE)
(86) Internationale Anmeldenummer: PCT/EP2019/069919
(87) Internationale Veröffentlichungsnummer: WO 2020/221469

(56) Entgegenhaltungen:
- WO-A1-2017/116682
- ES-U- 1 156 558
- US-A1- 2010 132 157
- US-A1- 2016 185 371
- US-A1- 2018 093 690

## Beschreibung

Die vorliegende Erfindung betrifft einen fahrbaren Warenkorb mit wenigstens einem Korb, wenigstens einem Ziehgriff und Rollen.

Aus dem Stand der Technik sind bereits fahrbare Warenkörbe bekannt, die insbesondere im Einzelhandel Verwendung finden. So ist beispielsweise aus der ES 1 064 029 U ein fahrbarer Warenkorb bekannt, bei dem die Rollen bodenseitig des Korbes angeordnet sind und dort über entsprechende Einschiebbereiche entsprechend eingeschoben und dort verrastend befestigt werden können.

Darüber hinaus ist weiter ein derartiger Warenkorb aus der EP 2 167 366 B1 bekannt, der einen Warenkorb mit einem Ziehgriff aufweist, wobei der Ziehgriff mittels eines Drehscharniers an der Einlegeöffnung schwenkbar befestigt ist.

Die DE 29 607 018 U1 offenbart weiter ein Einkaufsnetz für einen Einkaufswagen, das am Einkaufswagenkorb eingehängt werden kann.

Die US 6,186,382 B1 offenbart einen Zubehörhalter für einen Einkaufswagenkorb, der am Korbgitter eines Einkaufswagens mittels einer Verschraubung befestigt werden kann.

Die ES 1 156 558 U offenbart weiter einen zieh- und stapelbaren Warenkorb mit von außen bzw. randseitig bodenseitig einsteckbaren Rollen, die mit einem gesonderten Fixierungselement befestigt werden müssen.

Die US 2010/0132157 A1 offenbart eine Rolleinrichtung mit abnehmbaren Rolleinheiten für einen tragbaren Luftentfeuchter.

Es ist die Aufgabe der vorliegenden Erfindung, einen fahrbaren Warenkorb der eingangs genannten Art in vorteilhafter Weise weiterzubilden, insbesondere dahingehend, dass die Rollen des Warenkorbes einfacher und sicherer als bislang befestigt, und auch ausgetauscht werden können.

Diese Aufgabe wird erfindungsgemäß gelöst durch einen fahrbaren Warenkorb mit den Merkmalen des Anspruchs 1. Danach ist vorgesehen, dass ein fahrbarer Warenkorb mit wenigstens einem Korb, wenigstens einem Ziehgriff und Rollen versehen ist, wobei die Rollen an einem Bodensegment des Korbes befestigt ist, wobei das Bodensegment eine Rolleneinsetzausnehmung aufweist, wobei die Rolleneinsetzausnehmung unterteilt ist in einen Einsetzbereich mit einem Verrastungselement und einen Festhaltebereich derart, dass die Rolle über den Einsetzbereich in den Festhaltebereich einsetzbar und im Festhaltebereich mittels des Verrastungselements im Festhaltebereich festhaltbar ist, und der Festhaltebereich randseitig angeordnet und der Einsetzbereich innenseitig angeordnet ist, wobei die Sicherung der Rolle ohne weitere Zusatzteile erfolgt, wobei der Festhaltebereich eine rippenartige Struktur umfasst.

Die Erfindung basiert auf dem Grundgedanken, Rollen des Warenkorbes bodenseitig am Korb derart anordnen zu können, dass diese einfach eingesetzt, aber auch einfach wieder entnommen werden können. Dies soll insbesondere werkzeuglos passieren können, weshalb sich eine Verrastungslösung anbietet. Durch das Vorsehen von Rollen wird es ermöglicht, dass der Korb geschoben oder auch gezogen werden kann. Ein gesondertes Fixierungselement ist nicht notwendig. Insbesondere kann die Fixierung der Rolle ausschließlich über das Verrastungselement und das Zusammenspiel mit dem Festhaltebereich erzielt werden.

Der Aufnahmebereich für die Befestigung der Schwenkrollen am Korbboden kann dabei mit einer vertieften Ausnahme, welche an den Innenseiten mit angeformten Rastnocken versehen ist, ausgebildet sein.

Die Aufnahme der Rollen ist dabei derart gestaltet, dass eine Befestigung der Rollen am Korb kostengünstig und ohne weitere Zusatzteile erfolgen kann. Der Aufnahmebereich für die Rollen ist dabei derart konstruiert, dass die Montage der Rolle als Ganzes ermöglicht wird. Die Rolle wird dabei zwanghaft über ein Verrastungselement geschoben und dann im Festhaltebereich in einer befestigten Endlage oder in einer Endlage, in der die Rolle für den Gebrauch im Festhaltebereich fixiert ist, mittels des Verrastungselements verrastet und somit gegen Entnahme oder Herausfallen gesichert ist. Die Verrastung kann durch Erhöhungen oder Hinterschneidungen im Aufnahmebereich der Rolle weiter erhöht werden. Dadurch wird es auch möglich, kostengünstige Materialien einsetzen zu können.

Eine werkzeuglose Befestigung, aber auch Entnahme wird hierdurch möglich. Insbesondere ist vorgesehen, dass der Festhaltebereich randseitig und der Einsetzbereich innenseitig angeordnet ist. Hierdurch wird erreicht, dass ein Abfallen der Rollen besser als bei bekannten Lösungen vermieden wird. Empirisch konnte beobachtet werden, dass randseitig einschiebbare Rollen aufgrund augenscheinlich höherer Belastung, z.B. durch Fliehkräfte, einem höheren Verschleiss unterliegen und nach vergleichsweise kurzer Standzeit herausfallen können, da die Rollen eine Neigung haben, sich insbesondere durch die Belastung bei Kurvenfahrten nach außen zu drücken, weshalb ein randseitig angeordneter Festhaltebereich hier das Verrastungselement vor übermäßiger Beanspruchung schützt. Es handelt sich somit bei einer Anordnung mit einem randseitigen Festhaltebereich und einem innenseitigen Einsetzbereich um eine selbstverstärkende Lösung.

Die Rolle kann in der Rolleneinsetzausnehmung lösbar befestigbar sein. Dies kann dadurch realisiert werden, dass das Verrastungselement eindrückbar ist, wodurch die Rolle entsprechend freigegeben werden kann.

Im Festhaltebereich können wenigstens eine, insbesondere zwei Einschiebeschiene(n) vorhanden sein. Die Einschiebeschienen können dabei derart ausgebildet und bemessen sein, dass eine auf einer Platte befestigte Rolle hier in die Einschiebeschienen eingeführt bzw. eingeschoben werden kann.

Das Verrastungselement kann eindrückbar ausgebildet sein, insbesondere derart eindrückbar sein, dass der Festhaltebereich freigegeben wird und die Rolle einschiebbar oder entnehmbar ist/wird. Dies ist insbesondere dann der Fall, wenn die Rolle in den Einsetzbereich eingesetzt wird und hierdurch durch die (Grund-)Platte der Rolle eine Eindrückbewegung durchgeführt wird, so dass hierdurch das Verrastungselement hineindrückt und die Rolle dann mit der Platte entsprechend in die Einschiebeschienen eingeschoben werden kann. Dabei werden die Kanten der Platte der Rolle in den Einschiebeschienen geführt. Nach der Einschiebebewegung kann das Verrastungselement zurückspringen und hierdurch die Platte im Festhaltebereich fixieren.

Darüber hinaus kann vorgesehen sein, dass die Rolle eine Lenkrolle ist. Derartige Lenkrollen sind um ihre Hochachse (Z-Achse) verschwenkbar, insbesondere um 360° verschwenkbar.

Des Weiteren kann vorgesehen sein, dass auch weiter eine feststehende Rolle vorgesehen ist. Die feststehenden Rollen können direkt am Korbboden befestigt sein oder ebenfalls in der Rolleneinsetzausnehmung entsprechend aufgenommen werden. Derartige feststehende Rollen werden auch Bockrollen genannt.

Darüber hinaus kann vorgesehen sein, dass der Ziehgriff schwenkbar ausgebildet ist und einen gabelartigen Aufnahmebereich aufweist, mittels dessen der Ziehgriff am Korb schwenkbar verrastbar ist. Denkbar ist insbesondere, dass der Ziehgriff mit einem schwenkbaren Griff ausgestattet ist, der in der Nichtgebrauchslage in der unteren Endlage, d.h. auf dem Rand der Korbeinlegeöffnung verweilt. Bei Benutzung ist es dann möglich, den Ziehgriff bis zur oberen Endlage zu schwenken, um diesen in eine angenehme Komfortlage zu versetzen, in der der Nutzer den Korb mittels des Ziehgriffes ziehen kann. Im Aufnahmebereich für die Befestigung am Korb kann sich eine gabelartige Aufnahme befinden, wobei sich an den Innenseiten der gabelartigen Aufnahme angeformte Rastnoppen befinden können, mittels derer der Ziehgriff am Korb entsprechend befestigt und dort eingerastet werden kann. Der Aufnahmebereich am Korb für den Ziehgriff und die Ausführung der Verrastungen am Griff sind dabei so konstruiert, dass die Montage des Griffes als Ganzes ermöglicht wird. Der Griff wird bei der Montage zwanghaft über den Aufnahmesockel am Korb geschoben und nach der Positionierung verrastet und somit vor Entnahme gesichert. Die gabelförmigen Endbereiche des Griffes formen sich dabei temporär beim Montieren des Griffs. Sobald die Rastnoppen des Griffes in die hierfür vorgesehenen Lager einrasten, werden diese in die Endlage gepresst, so dass eine dauerhafte Positionierung des Griffes ermöglicht wird. Die Ziehgriffaufnahme von Korb und Griff ist derart gestaltet, dass eine Befestigung am Korb ohne weitere Teile erfolgen kann. Das hat den Vorteil, dass im Zusammenspiel auftretende Kräfte, wie beispielsweise Biegung, Torsion oder Zug gezielt in die Bauteile eingeleitet werden können und somit auch kostengünstige Materialien, wie beispielsweise Kunststoffe, wie Polypropylen (PP), eingesetzt werden können.

Der Ziehgriff kann in einer eingeklappten Stellung in die Außenkontur des Korbes eingefügt und/oder versenkbar sein.

Darüber hinaus kann vorgesehen sein, dass der Korb einen eine Korbeinlegeöffnung begrenzenden Rand aufweist, wobei am Rand wenigstens ein Taschenhaken angeordnet, insbesondere angeformt ist. Bei dem Taschenhaken kann es sich insbesondere um Nasen, Vorsprünge oder dergleichen handeln, in bzw. an denen die Tüten oder Taschen mit ihren Griffen entsprechend eingehängt werden können, so dass eine eigens vom Kunden mitgebrachte Tüte bzw. ein eigener Korb dort entsprechend im Korb selbst aufgespannt werden kann, so dass die vom Kunden ausgewählten Waren direkt in die eigene Tasche, die im Warenkorb selbst aufgespannt ist, eingelegt werden können. Auch handelsübliche Obst- / Gemüsetüten können dort eingehängt werden. Diese können dann aufgeräumt an der Innenseite des Korbes ohne Bodenkontakt hängen und so nicht einfach zerdrückt werden. Der Haken / die Leiste kann in der Mitte noch eine weitere Aussparung aufweisen, so dass unterschiedliche Größen eingehängt werden können. Denkbar ist auch, dass der Taschenhaken einen entsprechenden Aufdruck bzw. Erklärbeschriftungen erhält, so dass auch ungeübte Kunden diesen unmittelbar benutzen können.

Darüber hinaus kann vorgesehen sein, dass der Korb ein Kunststoffkorb ist. Denkbar ist beispielsweise Polypropylen (PP) oder Polyamide (PA) oder faserverstärkte Kunststoffe zu verwenden.

Darüber hinaus kann vorgesehen sein, dass weiter eine Zubehörhalterung vorgesehen ist, die am Warenkorb befestigbar, insbesondere lösbar befestigbar ist. Denkbar ist insbesondere, die Zubehörhalterung mittels einer bloßen Steckverbindung dort befestigen zu können. Denkbar ist auch eine Verrastungslösung oder eine Nietlösung. Bei der Zubehörhalterung kann es sich um einen Adapter für verschiedene Becher, Scanner, Lupen oder dergleichen handeln. Auch eine Smartphonehalterung kann entsprechend vorgesehen sein. Bei den Scannern kann es sich um Warenscanner handeln.

Weitere Einzelheiten und Vorteile der Erfindungen sollen nun anhand eines in den Zeichnungen näher dargestellten Ausführungsbeispiels erläutert werden.

Es zeigen:
- Fig. 1: eine perspektivische Darstellung eines erfindungsgemäßen Ausführungsbeispiels eines fahrbaren Warenkorbes;
- Fig. 2: eine Seitenansicht des Warenkorbes gemäß Fig. 1;
- Fig. 3: eine Draufsicht auf den Warenkorb gemäß Fig. 1;
- Fig. 3a-d: Detaildarstellungen des Ziehgriffs des Warenkorbs sowie seiner Montage;
- Fig. 4: eine Ansicht der Unterseite auf den Warenkorb gemäß Fig. 1;
- Fig. 5: eine Detaildarstellung des Warenkorbes gemäß Fig. 1;
- Fig. 6: eine weitere Detaildarstellung auf den Warenkorb gemäß Fig. 1;
- Fig. 7: eine weitere Detaildarstellung auf den Warenkorb gemäß Fig. 1;
- Fig. 8a, b: Detaildarstellungen von Zubehörbauteilen für den Warenkorb gem. Fig. 1,
- Fig. 9: eine weitere Darstellung des Warenkorbs mit Taschenhanken.

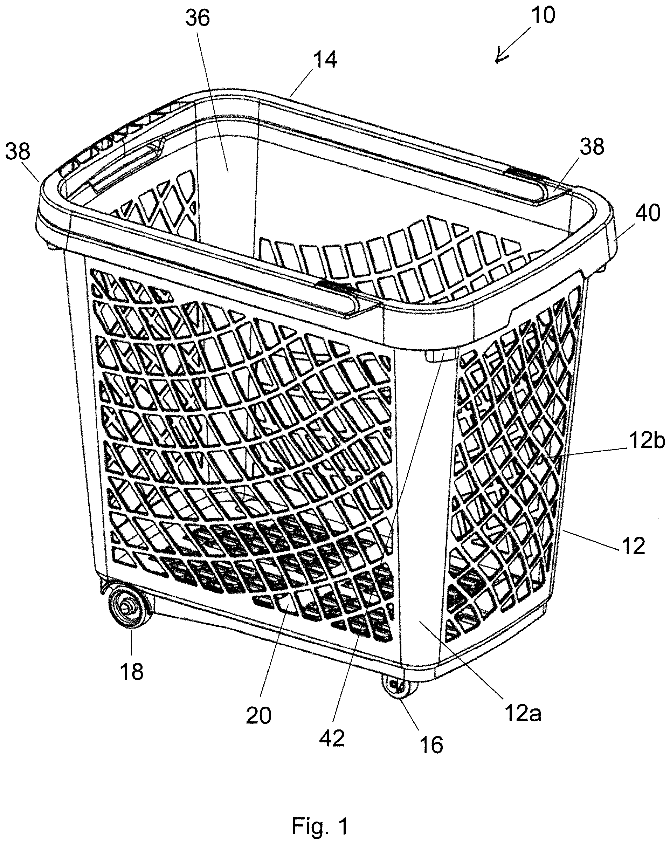

**Fig. 1** zeigt ein erfindungsgemäßes Ausführungsbeispiel eines fahrbaren Warenkorbes 10 in einer perspektivischen Darstellung. Der Warenkorb 10 weist dabei einen Korb 12, einen Ziehgriff 14 und vier Rollen 16, 18 auf. Hierbei sind vorzugsweise zwei Schwenkrollen 16 und zwei sogenannte Bockrollen 18 eingesetzt. Der Korb 12 ist in den Ecken jeweils mit durchgängigen Materialstreben 12a ausgebildet, während die Wandelemente 12b gitterartig bzw. maschenartig ausgebildet sind. Der fahrbare Warenkorb 10 bzw. insbesondere der Korb 12 ist im Wesentlichen aus Kunststoff ausgeführt. Denkbare und geeignete Kunststoffe sind beispielsweise Polyamid (PA), Polypropylen (PP), mit oder ohne Faserverstärkung, oder sonstige geeignete Kunststoffe. Denkbar ist weiter, dass es sich bei dem Korb 12 um ein Kunststoffspritzgussteil handelt.

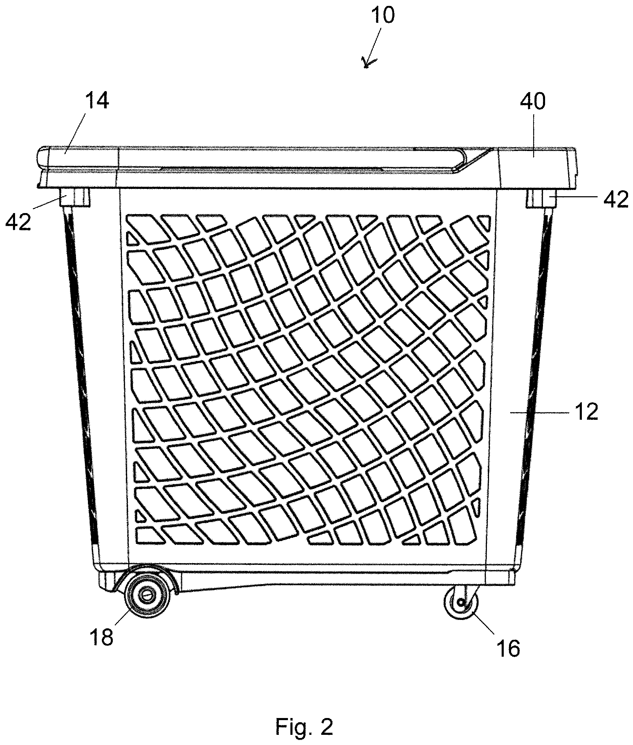

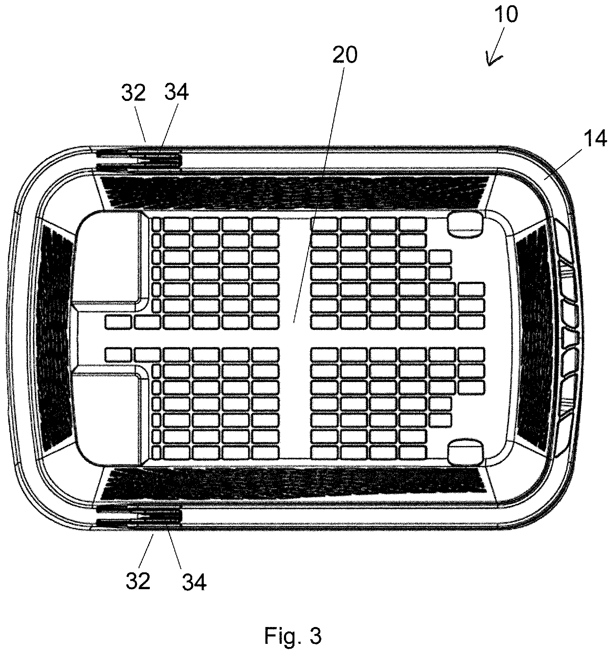

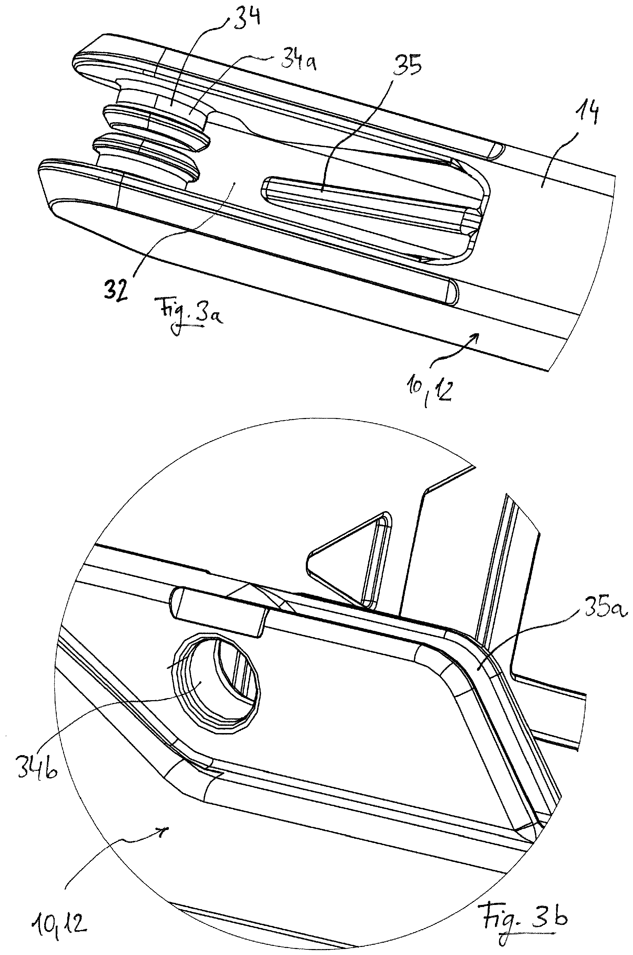

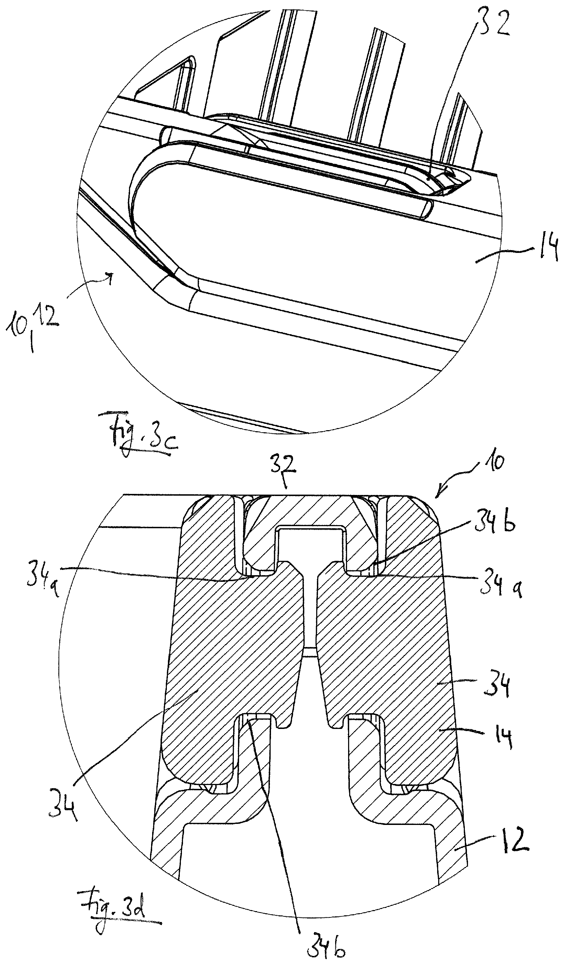

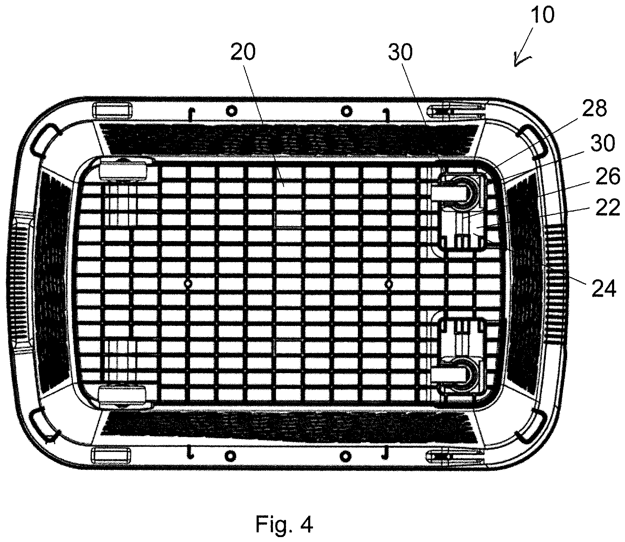

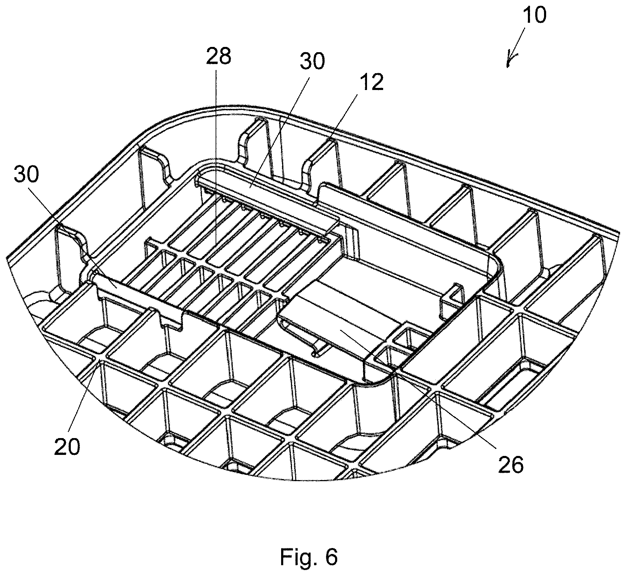

**Fig. 2** zeigt eine Seitenansicht des Warenkorbes 10 gemäß **Fig. 1** und **Fig. 3** eine Draufsicht auf den Warenkorb 10 gemäß **Fig. 1****.** Die Rollen 16, 18 sind dabei bodenseitig am Korb 12, d.h. am Bodensegment 20 des Korbes 12 befestigt. Wie dies weiter aus den Detaildarstellungen in **Fig. 4****,** **Fig. 5****,** **Fig. 6** und **Fig. 7** ersichtlich ist, ist im Bodensegment 20 eine Rolleneinsetzausnehmung 22 vorgesehen. Die Rolleneinsetzausnehmung 22 ist dabei in einem Einsetzbereich 24 mit einem Verrastungselement 26 versehen. Darüber hinaus weist die Rolleneinsetzausnehmung 22 auch einen Festhaltebereich 28 auf. Der Festhaltebereich 28 ist dabei randseitig angeordnet und der Einsetzbereich 24 innenseitig angeordnet. Weiter sind im Festhaltebereich 28 Einschiebeschienen 30 vorgesehen.

Der Ziehgriff 14 ist, schwenkbar ausgebildet. Details des Ziehgriffes 14 und der Ausnehmung sind in **Fig. 3a****-d** gezeigt. Der Ziehgriff 14 weist einen gabelartigen Aufnahmebereich 32 auf. Der gabelartige Aufnahmebereich 32 ist ferner mit Rastnoppen 34 bzw. Lagerzapfen 34, die innenliegend ausgebildet sind, versehen. Die Lagerzapfen 34 weisen eine abschnittsweise runde bzw. abschnittsweise zylindrische Außenkontur 34a auf, die als Lagerfläche und Verdrehfläche dient. Hierdurch wird - im montierten Zustand des Warenkorbs 10 ein Verschwenken des Ziehgriffs 14 relativ zum Korb 12 ermöglicht. Die Lagerzapfen 34 mit ihrer zylindrischen Außenkontur 34a sind im montierten Zustand in entsprechend dafür vorgesehene Rundausnehmungen 34b im Korb 12 eingesetzt und dort verrastet. Außerdem weist der gabelartige Aufnahmebereich 32 eine Führungsnase 35 auf. Als Gegenstück hierzu weist der Korb 12 eine Führungsausnehmung 35a auf. Die Führungsnase 35 greift im montierten Zustand in die Führungsausnehmung 35a ein und wird durch diese geführt. Im montierten Zustand ist der Ziehgriff 14 mittels des gabelartigen Aufnahmebereiches 32 und der Rastnoppen 34 am Korb 12 schwenkbar verrastet. Wie dies weiter aus **Fig. 1** ersichtlich ist, ist der Ziehgriff 14 in einer eingeklappten Stellung in die Außenkontur des Korbes 12 eingefügt. Hierzu weist der Korb 12 eine randseitig an der oberen Einfüllöffnung 36 befindliche, teilweise umlaufende Absenkung bzw. Einformung 38 auf, in die der Ziehgriff 14 im zusammengeklappten Zustand eingeschwenkt werden kann. Der Ziehgriff 14 ist somit in die Außenkontur des Korbes 12 versenkt.

Die Einfüllöffnung 36 weist einen Rand 40 auf. Am Rand 40 sind dabei Taschenhakenfortsätze 42 angeformt, die sich in Richtung Boden im aufgestellten und montierten Zustand des Korbes 12 vom Rand 40 weg hin erstrecken und freistehend sind. Die Taschenhakenfortsätze 42 sind als vorspringende bzw. aus dem Rand 40 herausstehende Haken ausgebildet.

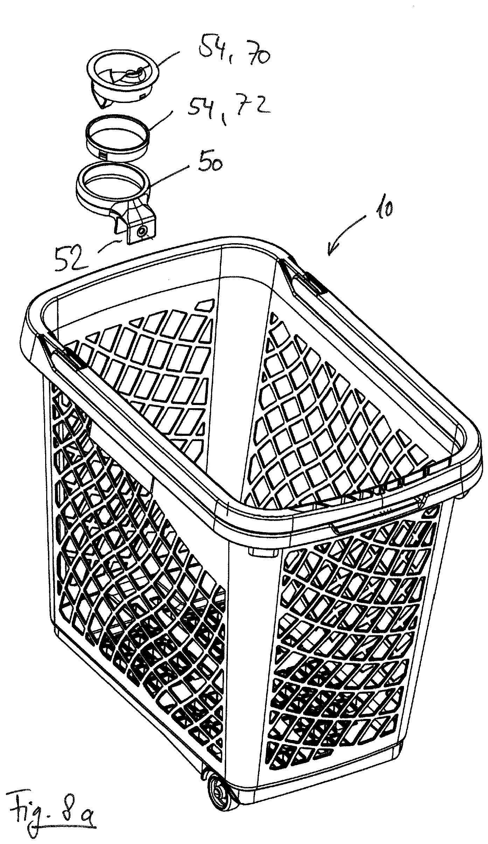

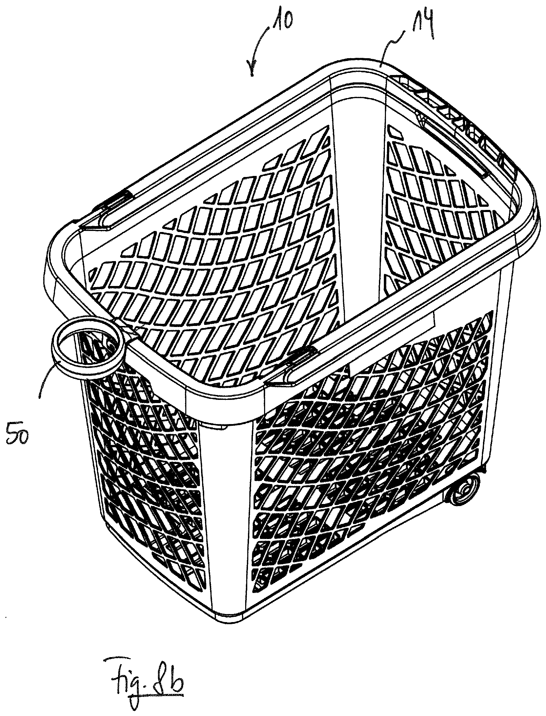

**Fig. 8a**, b zeigen Detaildarstellungen von Zubehörbauteilen für den Warenkorb 10 gem. **Fig. 1****.** Wie dies weiter aus **Fig. 8a** ersichtlich ist, ist weiter eine Zubehörhalterung 50 vorgesehen, die am Warenkorb 10, insbesondere am umlaufenden Rand 40 des Korbes 12 befestigbar, nämlich aufsteckbar befestigbar ist. Die Zubehörhalterung 50 weist eine Klemme 52 auf. Als Werkstoff für die Zubehörhalterung 50 kann beispielsweise Kunststoff eingesetzt werden, z.B. der für den Korb 12 eingesetzte Kunststoff. Die Klemme 52 ist dabei mit einem im Wesentlichen U-förmigen Querschnitt versehen. Weiter ist sie an die Abmessungen des Randes 40 angepasst und zwar derart, dass sie klemmend auf den Rand 40 aufgesetzt werden kann. Die Klemmkraft ist dabei derart bemessen, dass sie die Zubehörhalterung 50 und etwaige für den Einsatz in die Zubehörhalterung 50 vorgesehene Gegenstände halten kann. Die Zubehörhalterung 50 kann einen oder mehrere Einsätze 54 aufweisen.

Im in **Fig. 8a** gezeigten Ausführungsbeispiel ist ein Ringeinsatz 72 (z.B. aus Gummi oder Silikon) gezeigt, wie er beispielsweise für die Verwendung als Becherhalter vorgesehen sein kann.

Alternativ kann ein Einsatz 70 für einen Warenscanner oder ein mobiles Telekommunikationsgerät Verwendung finden. Weitere alternative Einsätze sind denkbar.

**Fig. 8b** zeigt in perspektivischer Darstellung den Warenkorb 10 mit einer Zubehörhalterung 50 wie in **Fig. 8a** gezeigt und zwar im Anwendungsfall eines Becherhalters.

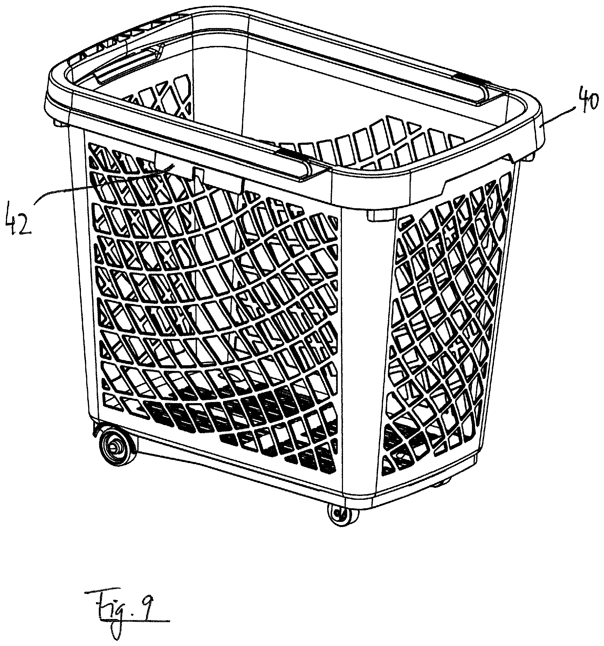

In **Fig. 9** ist ein Warenkorb 10 mit einem Taschenhaken 42 dargestellt. Der Taschenhaken 42 ist vorzugsweise an der breiteren Seite des Korbes 12, insbesondere unterhalb des Randes 40 vorgesehen. Er kann, wie dargestellt, eine Ausbuchtung zum besseren Anordnen einer Tasche aufweisen.

Die Funktion und Montage des Warenkorbs 10 lässt sich wie folgt beschreiben:
Der Warenkorb 10 ist in der in den Figuren gezeigten Ausführungsform als Warenkorb 10 für Einkaufswaren im Einzelhandel ausgeführt. Er kann beispielsweise im Einzelhandel wie in Supermärkten oder sog. Convenience-Stores eingesetzt werden. Aber auch ein Einsatz in Kaufhäusern oder Outlet-Stores ist denkbar. Die Struktur der Materialstreben 12a und der Wandelemente 12b gibt dem Korb 12 einerseits die notwendige Stabilität durch die Materialstreben 12a und andererseits ist es aufgrund der Ausgestaltung der Wandelemente 12b möglich, Material und Gewicht einsparen zu können. Des Weiteren wird die Handhabung des Korbes 12 bzw. des fahrbaren Warenkorbes 10 vereinfacht, weil durch die "Wände hindurch" das Korbinnere ersichtlich ist. Mit anderen Worten ist ein Blick auf den Korbinhalt aus vielen Blickwinkeln ermöglicht. Die Taschenhaken 42 sind derart beschaffen und angeordnet, dass in sie Tüten oder Taschen mit ihren Griffen entsprechend eingehängt werden können. Nutzer können so eine eigene mitgebrachte Tüte bzw. einen eigenen Korb dort entsprechend im Warenkorb 10 selbst aufspannen, so dass die vom Kunden ausgewählten Waren direkt in die eigene Tasche eingelegt werden können. Auch handelsübliche Obst- / Gemüsetüten können dort eingehängt werden. Diese können dann aufgeräumt an der Innenseite des Korbes 12 ohne Bodenkontakt hängen und so nicht einfach zerdrückt werden. Die Taschenhaken 42 können in der Mitte noch eine (oder auch mehrere) weitere Aussparung aufweisen, so dass unterschiedliche Größen eingehängt werden können. Denkbar ist auch, dass die Taschenhaken 42 einen Aufdruck bzw. Erklärbeschriftungen erhalten, so dass auch ungeübte Kunden diesen unmittelbar benutzen können.

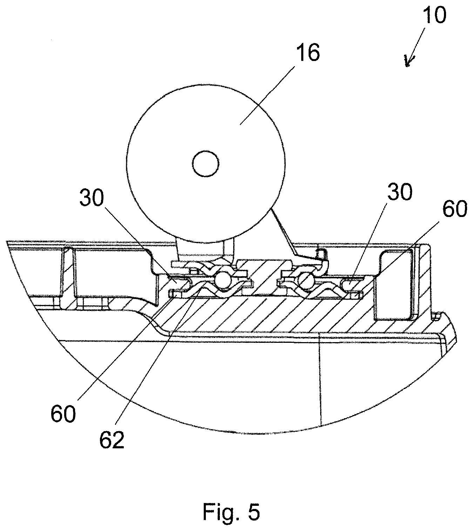

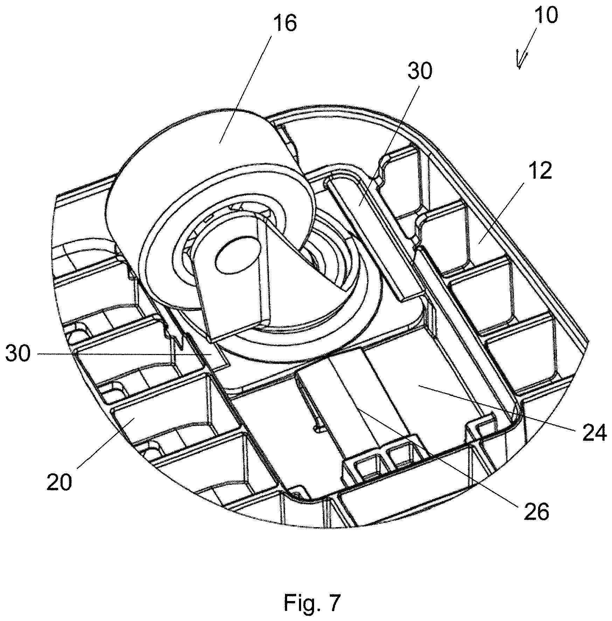

Die Montage der Rollen 16, 18 wie in den Fig. 5ff. gezeigt ist, erfolgt wie folgt:
Die Rollen 16 können über den Einsetzbereich 24 durch ein Herunterdrücken des Verrastungselements 26, hier eine Rastnase 26 eingedrückt werden. Dieser Schritt wird auch Platzierung der Rolle im Einsetzbereich 24 genannt. Dieser Schritt ermöglicht den nächsten Montageschritt, nämlich, dass die Randkante 60 der Befestigungsplatte 62 der Rolle 16 in die Einschiebeschiene 30 eingeschoben werden kann. Nach erfolgtem vollständigen Einschieben der Befestigungsplatte 62 in den Festhaltebereich 28 springt die Rastnase 26 wieder vor und arretiert bzw. verrastet die nunmehr eingeschobene Rolle 16 im Festhaltebereich 28, wie dies in **Fig. 7** gezeigt ist. Die Rastnase 26 erfüllt somit auch die Funktion einer Rastfeder. Zusätzlich zur Rastnase 26 befindet sich unterhalb der Schultern eine Kurvengeometrie, welche zur Rolleneinführungsrichtung hinterschnittig gestaltet ist. Die Befestigungsplatte 62 der Rolle 16 ist im Gegensatz dazu im hinterschnittigen Bereich der Aufnahme ausgeformt, so dass hierdurch eine zusätzliche Montagesicherung erreicht wird. Die Endlage wird zwanghaft erreicht. Die Sicherung der Rolle 16 erfolgt ohne weitere Zusatzteile.

Die Montage des Ziehgriffs 14 am Korb 12 erfolgt wie folgt:
In einem ersten Schritt werden die beiden Schenkel des gabelartigen Aufnahmebereich 32 mit den angeformten Lagerzapfen 34 gespreizt. Hierzu kann ein Werkzeug wie ein Keil oder dergleichen verwendet werden, dies ist aber nicht zwingend. Sodann wird in einem zweiten Schritt der Ziehgriff 14 mit den gespreizten Aufnahmebereichen 32 bis zu den Rundausnehmungen 34b im Korb 12 vorgeschoben und dort verrastet bzw. eingeklipst. Hierzu können die beiden Schenkel des gabelartigen Aufnahmebereichs 32 zusammengedrückt werden, so dass die beiden Lagerzapfen 34 durch die Rundausnehmungen 34b hindurchtreten und unlösbar im hinterschnittigen Bereich der Rundausnehmungen 34b einrasten (vgl. **Fig. 3d**).

### Bezugszeichen

- 10: fahrbarer Warenkorb
- 12: Korb
- 12a: Materialstrebe
- 12b: Wandelement
- 14: Ziehgriff
- 16: Rolle, Schwenkrolle
- 18: Rolle, Bockrolle
- 20: Bodensegment
- 22: Rolleneinsetzausnehmung
- 24: Einsetzbereich
- 26: Verrastungselement, Rastnase
- 28: Festhaltebereich
- 30: Einschiebeschiene
- 32: Aufnahmebereich
- 34: Rastnoppe, Lagerzapfen
- 34a: zylindrische Außenkontur
- 34b: Rundausnehmungen
- 35: Führungsnase
- 35a: Führungsausnehmung
- 36: Einfüllöffnung
- 38: Einformung
- 40: Rand
- 42: Taschenhaken
- 50: Zubehörhalterung
- 52: Klemme
- 54: Einsatz
- 60: Randkante
- 62: Befestigungsplatte
- 70: Einsatz
- 72: Ringeinsatz

## Patentansprüche

1. Fahrbarer Warenkorb (10) mit wenigstens einem Korb (12), wenigstens einem Ziehgriff (14) und Rollen (16, 18), wobei die Rollen (16) an einem Bodensegment (20) des Korbes (12) befestigt sind, wobei das Bodensegment (20) eine Rolleneinsetzausnehmung (22) aufweist, wobei die Rolleneinsetzausnehmung (22) unterteilt ist in einen Einsetzbereich (24) mit einem Verrastungselement (26) und einen Festhaltebereich (28) derart, dass die Rolle (16) über den Einsetzbereich (24) in den Festhaltebereich (28) einsetzbar und im Festhaltebereich (28) mittels des Verrastungselements (26) im Festhaltebereich (28) festhaltbar ist, **dadurch gekennzeichnet, dass** der Festhaltebereich (28) randseitig angeordnet und der Einsetzbereich (24) innenseitig angeordnet ist, wobei die Sicherung der Rolle (16) ohne weitere Zusatzteile erfolgt, wobei der Festhaltebereich (28) eine rippenartige Struktur umfasst.

2. Warenkorb (10) nach Anspruch 1, **dadurch gekennzeichnet, dass** die Rolle (16) in der Rolleneinsetzausnehmung (22) lösbar befestigbar ist.

3. Warenkorb (10) nach Anspruch 1 oder Anspruch 2, **dadurch gekennzeichnet, dass** im Festhaltebereich (28) wenigstens eine, insbesondere zwei, Einschiebeschiene(n) (30) vorhanden sind.

4. Warenkorb (10) nach einem der vorhergehenden Ansprüche, **dadurch gekennzeichnet, dass** das Verrastungselement (26) eindrückbar ist, insbesondere derart eindrückbar ist, dass der Festhaltbereich (28) freigegeben wird und die Rolle (16) einschiebbar oder entnehmbar ist.

5. Warenkorb (10) nach einem der vorhergehenden Ansprüche, **dadurch gekennzeichnet, dass** der Ziehgriff (14) schwenkbar ausgebildet ist und einen gabelartigen Aufnahmebereich (32) aufweist, mittels dessen der Ziehgriff (14) am Korb (12) schwenkbar verrastbar ist.

6. Warenkorb (10) nach Anspruch 5, **dadurch gekennzeichnet, dass** der Ziehgriff (14) in einer eingeklappten Stellung in die Außenkontur des Korbes (12) eingefügt und/oder versenkbar ist.

7. Warenkorb (10) nach einem der vorhergehenden Ansprüche, **dadurch gekennzeichnet, dass** der Korb (12) einen eine Korbeinfüllöffnung (36) begrenzenden Rand (40) aufweist, wobei am Rand (40) wenigstens ein Taschenhakenfortsatz (42) angeordnet, insbesondere angeformt ist.

8. Warenkorb (10) nach einem der vorhergehenden Ansprüche, **dadurch gekennzeichnet, dass** weiter eine Zubehörhalterung (50) vorgesehen ist, die am Warenkorb (10) befestigbar, insbesondere lösbar befestigbar ist.

9. Warenkorb (10) nach einem der vorhergehenden Ansprüche, **dadurch gekennzeichnet, dass** der Korb (12) ein Kunststoffkorb ist.

## Claims

1. Mobile shopping basket (10) comprising at least one basket (12), at least one pulling handle (14) and castors (16, 18), wherein the castors (16) are fastened to a bottom segment (20) of the basket (12), wherein the bottom segment (20) has a castor insertion recess (22), wherein the castor insertion recess (22) is divided into an insertion region (24) having a latching element (26) and into a securing region (28) in such a manner that the castor (16) is insertable via the insertion region (24) into the securing region (28) and is securable in the securing region (28) by means of the latching element (26) in the securing region (28), **characterized in that** the securing region (28) is arranged at the edge and the insertion region (24) is arranged on the inside, wherein the castor (16) is secured without further additional parts, wherein the securing region (28) comprises a rib-like structure.

2. Shopping basket (10) according to Claim 1, **characterized in that** the castor (16) is releasably fastenable in the castor insertion recess (22).

3. Shopping basket (10) according to Claim 1 or Claim 2, **characterized in that** at least one push-in rail (30), in particular two push-in rails (30), is/are present in the securing region (28).

4. Shopping basket (10) according to one of the preceding claims, **characterized in that** the latching element (26) can be pressed in, in particular can be pressed in in such a manner that the securing region (28) is opened up and the castor (16) can be pushed in or can be removed.

5. Shopping basket (10) according to one of the preceding claims, **characterized in that** the pulling handle (14) is designed to be pivotable and has a fork-like receiving region (32), by means of which the pulling handle (14) is latchable pivotably to the basket (12).

6. Shopping basket (10) according to Claim 5, **characterized in that** the pulling handle (14) in a retracted position is inserted and/or can be recessed into the outer contour of the basket (12).

7. Shopping basket (10) according to one of the preceding claims, **characterized in that** the basket (12) has an edge (40) delimiting a basket filling opening (36), wherein at least one pocket hook extension (42) is arranged, in particular is integrally formed, on the edge (40) .

8. Shopping basket (10) according to one of the preceding claims, **characterized in that** furthermore an accessories holder (50) is provided which is fastenable, in particular releasably fastenable, to the shopping basket (10).

9. Shopping basket (10) according to one of the preceding claims, **characterized in that** the basket (12) is a plastics basket.

## Revendications

1. Panier d'achat mobile (10), comprenant au moins un panier (12), au moins une poignée de traction (14) et des roulettes (16, 18), dans lequel les roulettes (16) sont fixées à un segment de fond (20) du panier (12), dans lequel le segment de fond (20) présente un évidement d'insertion de roulette (22), dans lequel l'évidement d'insertion de roulette (22) est divisé en une zone d'insertion (24) avec un élément d'enclenchement (26) et une zone de retenue (28) de telle sorte que la roulette (16) peut être insérée par la zone d'insertion (24) dans la zone de retenue (28), et peut être retenue dans la zone de retenue (28) au moyen de l'élément d'enclenchement (26),
**caractérisé en ce que** la zone de retenue (28) est disposée côté bord et la zone d'insertion (24) est disposée côté intérieur, dans lequel le blocage de la roulette (16) a lieu sans autres pièces supplémentaires, dans lequel la zone de retenue (28) comprend une structure de type nervure.

2. Panier d'achat (10) selon la revendication 1, **caractérisé en ce que** la roulette (16) peut être fixée de manière amovible dans l'évidement d'insertion de roulette (22).

3. Panier d'achat (10) selon la revendication 1 ou la revendication 2, **caractérisé en ce que** dans la zone de retenue (28) il existe au moins un rail, en particulier deux rails, d'introduction (30).

4. Panier d'achat (10) selon l'une quelconque des revendications précédentes, **caractérisé en ce que** l'élément d'enclenchement (26) peut être enfoncé, en particulier enfoncé de telle sorte que la zone de retenue (28) est libérée et la roulette (16) peut être introduite ou retirée.

5. Panier d'achat (10) selon l'une quelconque des revendications précédentes, **caractérisé en ce que** la poignée de traction (14) est réalisée de manière à pouvoir pivoter et présente une zone de logement (32) de type fourche au moyen de laquelle la poignée de traction (14) peut être enclenchée en pivotement sur le panier (12) .

6. Panier d'achat (10) selon la revendication 5, **caractérisé en ce que** dans une position repliée, la poignée de traction (14) est insérée et/ou peut être encastrée dans le contour extérieur du panier (12).

7. Panier d'achat (10) selon l'une quelconque des revendications précédentes, **caractérisé en ce que** le panier (12) présente un bord (40) délimitant une ouverture de remplissage de panier (36), dans lequel au moins un prolongement de crochet à sac (42) est disposé, en particulier rapporté, sur le bord (40).

8. Panier d'achat (10) selon l'une quelconque des revendications précédentes, **caractérisé en ce qu'**en outre un support d'accessoires (50) est prévu qui peut être fixé, en particulier fixé de manière amovible, au panier d'achat (10).

9. Panier d'achat (10) selon l'une quelconque des revendications précédentes, **caractérisé en ce que** le panier (12) est un panier en plastique.
